# EUROPEAN PATENT SPECIFICATION

(11) **EP 1 854 700 B1**
(45) Date of publication and mention of the grant of the patent: **04.04.2012**
(21) Application number: 07007485.1
(22) Date of filing: 12.04.2007
(51) Int. Cl.: B62D 1/187, B62D 1/184

(54) **Tilting and telescopic steering column**
Neigbare und ausziehbare Lenksäule
Colonne de direction inclinable et téléscopique

(30) Priority: 09.05.2006 KR 20060041714
(43) Date of publication of application: 14.11.2007
(73) Proprietor: Mando Corporation, Pyeongtaek-si, Gyeonggi-do (KR)
(72) Inventor: Park, Jung Sik, Wonju Si, Gangwon-Do (KR)
(74) Representative: Bosch, Matthias

(56) References cited:
- US-A- 5 439 252
- US-A1- 2005 145 056

## Description

### Field of the invention

The present invention relates to a tilting and telescopic steering apparatus, as e.g. disclosed in US 5, 439, 252 A1, and more particularly to a tilting and telescopic steering apparatus in which a cable is removed and an adjusting lever is provided on a telescopic bracket, thereby smoothing the tilting and telescoping operations thereof, and allowing the adjusting lever not to move relative to a shroud cover.

### BACKGROUND OF THE INVENTION

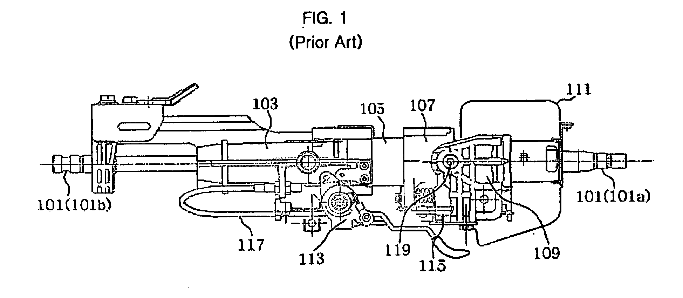

FIG. 1 is a partial side view of a conventional tilting and telescopic steering apparatus.

As shown in FIG. 1, the conventional tilting and telescopic steering apparatus includes a steering shaft 101 connected to a steering wheel (not shown), a column housing 103 surrounding the steering shaft 101, a telescopic tube 105 slidably coupled to the rear side of the column housing 103, a telescopic bracket 107 coupled to the rear side of the telescopic tube 105, a tilt bracket 109 rotatably coupled to one side of the telescopic bracket 107, a shroud cover 111 surrounding the tilt bracket 109, an adjusting lever 113 provided on one side of the column housing 103, a tilt gear 115 provided on one side of the tilt bracket 109, and a cable 117 connecting the adjusting lever 113 and the tilt gear 115 to each other.

The steering shaft 101 consists of an upper shaft 101a and a lower shaft 101b connected with each other via an universal joint (not shown), wherein the upper shaft 101a is built in the tilt bracket 109 and the lower shaft 101b is built in the column housing 103.

The tilt bracket 109 is rotatably coupled to the telescopic bracket 107 via a tilt shaft 119, and the centers of rotation in the upper shaft 101a and the tilt bracket 109 coincide with that of the tilt shaft 119. Thus, upon the tilting operation by an operator, the upper shaft 101a and the tilt bracket 109 are concentrically rotated.

Meanwhile, the operation of the adjusting lever 113 releases the contact state between the column housing 103 and the telescopic tube 105 and the locking state of the tilt gear 115, so that the operator can freely adjust the tilting and telescoping operations. This is because the cable 117 connected to the adjusting lever 113 is also connected to the tilt gear 115 so that the driving force of the adjusting lever 113 is transferred to the tilt gear 115.

However, the conventional apparatus having the above construction has following problems.

A first problem is that since the adjusting lever 113 is provided on the column housing 103 while being separated from the tilt bracket 109, when upon tilt adjusting, the shroud cover 111 rotates together with the tilt bracket 109, a gap between a grip of the adjusting lever 113 and the shroud cover 111 does not maintain constant.

A second problem is that when the adjusting of the cable 117 to link the adjusting lever with the tilt gear 115 is badly done, the tilting and the telescoping operations are not properly adjusted, and additional parts are required for installing the cable 117.

### SUMMARY OF THE INVENTION

Accordingly, the present invention has been made to solve the above-mentioned problems occurring in the prior art, and the present invention provides a tilting and telescopic steering apparatus in which a cable is removed and an adjusting lever is provided to a telescopic bracket, thereby smoothing the tilting and telescoping operations thereof and allowing the adjusting lever not to move relative to a shroud cover.

In order to accomplish the above object, in accordance with an aspect of the present invention, there is provided a tilting and telescopic steering apparatus comprising: a column housing surrounding a steering shaft; a telescopic tube coupled, on its one end, to the column housing; a telescopic bracket surrounding the other end of the telescopic tube so as to be slidably move along the telescopic tube; a tilt shaft provided in the telescopic bracket; a tilt bracket coupled to the tilt shaft; an adjusting bolt passing through one side of the telescopic bracket; a cam provided on one end of the adjusting bolt; an adjusting lever driving the cam; and a tilt gear provided on the other end of the adjusting bolt.

### BRIEF DESCRIPTION OF THE DRAWINGS

The above and other objects, features and advantages of the present invention will be more apparent from the following detailed description taken in conjunction with the accompanying drawings, in which:
FIG. 1 is a partial side view of a conventional tilting and telescopic steering apparatus;
FIG. 2 is a partial side view of a tilting and telescopic steering apparatus according to a preferred embodiment of the present invention; and
FIG. 3 is a sectional view taken along a line A-A of FIG. 2.

### DETAILED DESCRIPTION OF THE EXEMPLARY EMBODIMENTS

Hereinafter, an exemplary embodiment of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

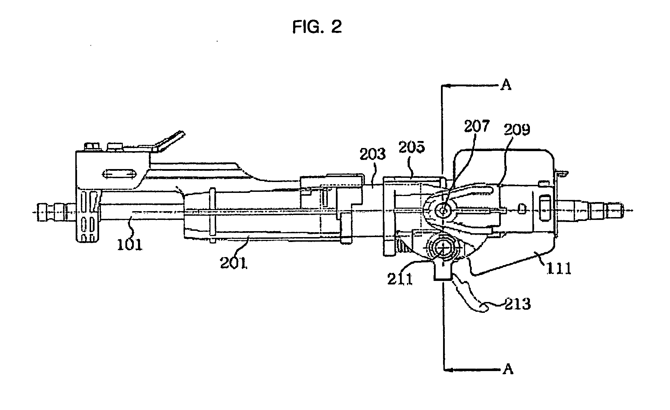

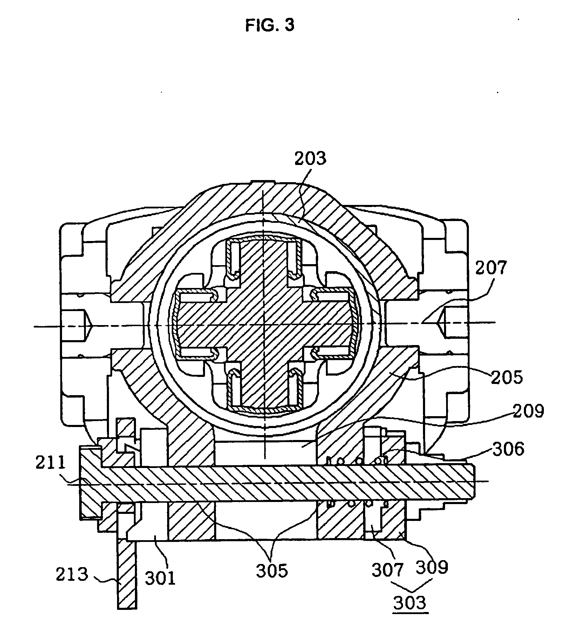

FIG. 2 is a partial side view of a tilting and telescopic steering apparatus according to a preferred embodiment of the present invention, and FIG. 3 is a sectional view taken along a line A-A of FIG. 2.

As shown in FIGS. 2 and 3, the tilting and telescopic apparatus includes a column housing 201 surrounding a steering shaft 101, a telescopic tube 203 coupled, on its one end, to the column housing 201, a telescopic bracket 205 surrounding the other end of the telescopic tube 203 so as to be slidably move along the telescopic tube 203, a tilt shaft 207 provided in the telescopic bracket 205, a tilt bracket 209 coupled to the tilt shaft 207, an adjusting bolt 211 passing through one side of the telescopic bracket 205, a cam 301 provided on one end of the adjusting bolt 211, an adjusting lever 213 driving the cam 301, and a tilt gear 303 provided on the other end of the adjusting bolt 211.

The telescopic tube 203 is coupled, on its one end, to the column housing 201 and surrounds the steering shaft 101.

The telescopic bracket 205 surrounds the other end of the telescopic tube 203 so as to be slidably move along the telescopic tube 203, thereby enabling the control of the telescoping operations.

The telescopic bracket 205 is provided, on its middle portion, with the tilt shaft 207, to which the tilt bracket 209 is rotatably coupled. In addition, a shroud cover 111 is provided around the circumference of the tilt bracket 209 to surround the same. Since the tilt bracket 209 is rotated about the tilt shaft 207, the tilting operation can be controlled.

The adjusting bolt 211 passes through the outer circumference of the telescopic bracket 205. The adjusting bolt 211 has, on its one end, the cam 301 and the adjusting lever 213, and has, on the other end, the tilt gear 303.

The adjusting bolt 211 is provided parallel with the tilt shaft 207 such that it passes through the telescopic bracket 205 and the tilt bracket 209. Since the middle portion of the adjusting bolt 211 is fixedly coupled to the tilt bracket 209, upon controlling the tilt, the adjusting bolt is rotated together with the tilt bracket 209. In addition, the adjusting bolt 211 passes through a slot 305 provided on the telescopic bracket 205, the slot having a sectional shape like a circle about the tilt shaft 207, so that upon controlling the tilt, the adjusting bolt 211 is rotated along the slot 305.

The cam 301 provided on one end of the adjusting bolt 211 is provided so as to be in contact with the circumferential face of the telescopic bracket 205, and is operated with the rotation of the adjusting lever 213, causing the adjusting bolt 211 to move in an axial direction.

Meanwhile, the adjusting bolt 211 is provided, on the other end thereof, with the tilt gear 303, which includes a stationary gear 307 fixed to the telescopic bracket 205 and a movable gear 309 engaged with the stationary gear 307. Similar to the telescopic bracket 205, the stationary gear 307 is provided inside with a slot 306, through which the adjusting bolt 211 passes, and the movable gear 309 coupled and fixed to the adjusting bolt 211.

The operation of the tilting and telescopic steering apparatus according to the preferred embodiment of the invention will be hereinafter explained in detail.

First, when an operator wants to control the tilting and telescoping operations, he/she rotates the adjusting lever 213 in one direction, so that the cam 301 is operated with the rotation of the adjusting lever 213, allowing the adjusting bolt 211 to move axially.

In case where the movable gear 309 is separated from the stationary gear 307 with the axial movement of the adjusting bolt 211, that is, when the tilt gear 303 is unlocked, the contact state between the telescopic bracket 205 and the telescopic tube 203 comes to be loosed.

Thus, the operator can control the degree of protruding and inclination of the steering shaft 101. After the completion of such control of the tilting and telescoping operations, the operator rotates the adjusting lever 213 in a counter-direction to restore the locking state of the tilt gear 303 and to loose the contact state between the telescopic bracket 205 and the telescopic tube 203.

According to the tilting and telescopic steering apparatus of the preferred embodiment having the above construction, the adjusting lever 213 is provided on the telescopic bracket 205 and the adjusting bolt 211 rotates with the tilt bracket 209, so that even upon controlling the tilt, the gap between the grip of the adjusting lever 213 and the shroud cover 111 is maintained constant. Thus, the prior problem in that upon every tilt control, the gap does not remain constant, can be solved by the above solution.

In addition, according to the tilting and telescopic steering apparatus of the preferred embodiment, the tilt gear 303, and therefore the telescopic bracket 205 and the telescopic tube 203, are locked or unlocked along with rotation of the adjusting lever 213 without using a separate cable, so that separate additional parts are not required, which resolves the prior problem of malfunction due to failure of cable control.

As set forth before, according to the present invention, the cable is removed and the adjusting lever is provided on the telescopic bracket, thereby smoothing the tilting and telescoping operations thereof and allowing the adjusting lever not to move relative to the shroud cover.

## Claims

1. A tilting and telescopic steering apparatus comprising:
a column housing (201) surrounding a steering shaft (101);
a telescopic tube (203) coupled, on its one end, to the column housing (201);
a telescopic bracket (205) surrounding the other end of the telescopic tube (203) so as to be slidably movable along the telescopic tube (203);
a tilt shaft (207) provided in the telescopic bracket (205);
a tilt bracket (209) coupled to the tilt shaft (207);
an adjusting bolt (211) passing through one side of the telescopic bracket (205);
a cam (301) provided on one end of the adjusting bolt (211);
an adjusting lever (213) driving the cam (301); and
a tilt gear (303) provided on the other end of the adjusting bolt (211),
wherein the tilt gear (303) comprises a stationary gear (307) fixed to the telescopic bracket (205) and a movable gear (309) fixed to the adjusting bolt (211) and engageable with the stationary gear (307).

2. The tilting and telescopic steering apparatus according to claim 1, wherein the movable gear (309) is separable from the stationary gear (307) by an axial movement of the adjusting bolt (211) caused by a rotation of the adjusting lever (213).

3. The tilting and telescopic steering apparatus according to claim 1, wherein the telescopic tube (203) is integrally formed with the column housing (201).

4. The tilting and telescopic steering apparatus according to claim 3, wherein the telescopic bracket (205) is provided with a slot through which the adjusting bolt (211) passes, the slot having a shape like a circle about the tilt shaft (207).

## Patentansprüche

1. Kippbare Teleskop-Lenkvorrichtung mit:
einem Säulengehäuse (201), das eine Lenkwelle (101) umgibt;
einem Teleskoprohr (203), das an seinem einen Ende mit dem Säulengehäuse (201) verbunden ist;
einem Teleskopbügel (205), der das andere Ende des Teleskoprohrs (203) umgibt, um entlang des Teleskoprohrs (203) gleitend beweglich zu sein;
einer Kippwelle (207), die in dem Teleskopbügel (205) vorgesehen ist;
einem Kippbügel (209), der mit der Kippwelle (207) verbunden ist;
einem Verstellbolzen (211), der durch eine Seite des Teleskopbügels (205) hindurchtritt;
einer Nocke (301), die an einem Ende des Verstellbolzens (211) vorgesehen ist;
einem Einstellhebel (213), der die Nocke (301) treibt; und
einem Kippantrieb (303), der am anderen Ende des Verstellbolzens (211) vorgesehen ist,
wobei der Kippantrieb (303) ein Standgetriebe (307) aufweist, das an dem Teleskopbügel (205) befestigt ist, und ein bewegliches Getriebe (309), das an dem Verstellbolzen (211) befestigt ist und mit dem Standgetriebe (307) in Eingriff gebracht werden kann.

2. Kippbare Teleskop-Lenkvorrichtung nach Anspruch 1, wobei das bewegliche Getriebe (309) von dem Standgetriebe (307) durch eine axiale Bewegung des Verstellbolzens (211), die durch eine Drehung des Einstellhebels (213) verursacht wird, getrennt werden kann.

3. Kippbare Teleskop-Lenkvorrichtung nach Anspruch 1, wobei das Teleskoprohr (203) einstückig mit dem Säulengehäuse (201) ausgebildet ist.

4. Kippbare Teleskop-Lenkvorrichtung nach Anspruch 3, wobei der Teleskopbügel (205) mit einem Schlitz versehen ist, durch den der Verstellbolzen (211) hindurchtritt, wobei der Schlitz die Form eines Kreises um die Kippwelle (207) herum hat.

## Revendications

1. Appareil de direction inclinable et télescopique comprenant :
un logement de colonne (201) entourant un arbre de direction (101) ;
un tube télescopique (203) couplé, à une extrémité, au logement de colonne(201);
un support télescopique (205) entourant l'autre extrémité du tube télescopique (203) de façon à être mobile de manière coulissante le long du tube télescopique (203) ;
un arbre d'inclinaison (207) prévu dans le support télescopique (205) ;
un support d'inclinaison (209) couplé à l'arbre d'inclinaison (207) ;
un boulon d'ajustement (211) passant à travers un côté du support télescopique (205) ;
une came (301) prévue sur une extrémité du boulon d'ajustement (211);
un levier d'ajustement (213) entraînant la came (301) ; et
un engrenage d'inclinaison (303) prévu sur l'autre extrémité du boulon d'ajustement (211),
dans lequel l'engrenage d'inclinaison (303) comprend un pignon stationnaire (307) fixé au support télescopique (205) et un pignon mobile (309) fixé au boulon d'ajustement (211) et engageable avec le pignon stationnaire (307).

2. Appareil de direction inclinable et télescopique selon la revendication 1, dans lequel le pignon mobile (309) est séparable du pignon stationnaire (307) par un mouvement axial du boulon d'ajustement (211) causé par une rotation du levier d'ajustement (213).

3. Appareil de direction inclinable et télescopique selon la revendication 1, dans lequel le tube télescopique (203) est formé de façon intégrale avec le logement de colonne (201).

4. Appareil de direction inclinable et télescopique selon la revendication 3, dans lequel le support télescopique (205) est prévu avec une fente à travers laquelle le boulon d'ajustement (211) passe, la fente ayant une forme comme un cercle autour de l'arbre d'inclinaison (207).
